# EUROPÄISCHE PATENTSCHRIFT

(11) **EP 1 038 513 B1**
(45) Veröffentlichungstag und Bekanntmachung des Hinweises auf die Patenterteilung: **27.07.2005**
(21) Anmeldenummer: 00101128.7
(22) Anmeldetag: 21.01.2000
(51) Int. Cl.: A61G 5/06

(54) **Treppensteigvorrichtung**
Stair climbing device
Dispositif pour monter les escaliers

(30) Priorität: 22.03.1999 DE 19912932
(43) Veröffentlichungstag der Anmeldung: 27.09.2000
(73) Patentinhaber: Ulrich Alber GmbH, 72461 Albstadt-Tailfingen (DE)
(72) Erfinder: Birmanns, Thomas, 72336 Balingen (DE); Bitzer, Paul-Gerhard, 72461 Albstadt (DE); Giocondi, Attilio, 72336 Balingen (DE)
(74) Vertreter: Staudt, Hans-Peter, Dipl.-Ing.

(56) Entgegenhaltungen:
- DE-A- 19 816 901
- DE-C- 19 737 339
- PATENT ABSTRACTS OF JAPAN vol. 007, no. 044 (M-195), 22. Februar 1983 (1983-02-22) & JP 57 194171 A (TOKYO SHIBAURA DENKI KK), 29. November 1982 (1982-11-29)

## Beschreibung

Die Erfindung betrifft eine Treppensteigvorrichtung, beispielsweise für Rollstühle für Gehunfähige, mit einer Trägereinheit und einer mit der Trägereinheit verbundenen Steigeinheit, wobei die Steigeinheit mindestens ein Steigelement aufweist, das durch einen Antriebsmotor antreibbar und so ausgebildet ist, daß es mit dem jeweils nächstgelegenen Treppenabsatz einer Treppe in Berührung gelangen und die Treppensteigvorrichtung auf den nächstgelegenen Treppenabsatz heraufheben oder absenken kann.

Eine derartige Treppensteigvorrichtung ist beispielsweise aus der DE-A-37 13 564 bekannt.

Neben dem speziellen Anwendungsgebiet der erfindungsgemäßen Treppensteigvorrichtung für Rollstühle umfaßt die Erfindung beliebige andere Treppensteigvorrichtungen, die mit oder ohne externe Bedienpersonen zum Transportieren von Lasten oder Personen auf Treppen geeignet sind.

Treppen sind insbesondere für Rollstuhlfahrer und Gehbehinderte ein allgegenwärtiges Problem. Eine Treppensteigvorrichtung der eingangs genannten Art ermöglicht es beispielsweise, daß Hilfspersonen einen Rollstuhlfahrer oder Gehbehinderten ohne nennenswerte körperliche Anstrengung allein mit Hilfe dieser Treppensteigvorrichtung eine Treppe hinauf oder hinab befördern können. Hierzu wird der Rollstuhl mit einer geeigneten Vorrichtung an der Trägereinheit befestigt, sofern nicht die Trägereinheit selbst als Stuhl ausgebildet ist, und die Treppensteigvorrichtung wird zusammen mit dem Rollstuhl an den untersten Treppenabsatz herangefahren. Die Hilfsperson kippt nunmehr die Treppensteigvorrichtung mit angebrachtem Rollstuhl zu sich ins Gleichgewicht. Bei Erreichen der idealen Kippstellung verspürt die Hilfsperson nur noch einen minimalen Druck nach vorne bzw. nach hinten. Bei Betätigung der Steigeinheit der Treppensteigvorrichtung gelangt nunmehr ein Steigelement mit dem nächstgelegenen Treppenabsatz in Berührung und hebt die Treppensteigvorrichtung auf den nächstgelegenen Treppenabsatz herauf. Dieser Vorgang wird so oft wiederholt, bis die Treppensteigvorrichtung auf der obersten Stufe der Treppe angelangt ist. Das Abwärtssteigen einer Treppe erfolgt analog in gleicher Weise.

Die aus dem Stand der Technik bekannten Treppensteigvorrichtungen weisen den Nachteil auf, daß der Steigvorgang relativ ruckartig erfolgt. Eine Bedienperson muß somit während des Steigvorgangs Lastwechselreaktionen ausgleichen, die wegen ihres schnellen, d.h. innerhalb einer kurzen Zeitspanne erfolgenden Auftretens deutlich spürbar sind.

Der Erfindung liegt das technische Problem zugrunde, eine gattungsgemäße Treppensteigvorrichtung dahingehend zu verbessern, daß die Bedienung erleichtert wird.

Die Lösung dieses technischen Problems ist in den Patentansprüchen angegeben.

Erfindungsgemäß ist eine Treppensteigvorrichtung der eingangs genannten Art dadurch gekennzeichnet, daß die Steigeinheit mit unterschiedlichen Antriebsgeschwindigkeiten betreibbar ist, wobei die Antriebsgeschwindigkeit kurz vor dem Aufsetzen eines Steigelements auf den nächstgelegenen Treppenabsatz gegenüber einer ersten vorbestimmten Antriebsgeschwindigkeit reduzierbar ist, so daß ein weiches Aufsetzen erreicht wird, und nach dem Aufsetzen auf den nächstgelegenen Treppenabsatz wieder auf die erste vorbestimmte Antriebsgeschwindigkeit erhöht wird.

Durch das weiche Aufsetzen auf den jeweiligen Treppenabsatz wird das Beherschen von Lastwechselreaktionen für die Bedienperson wesentlich erleichtert. Hierdurch wird mehr Sicherheit sowohl für die Bedienperson als auch für die Person im Rollstuhl erreicht. Zudem wird der Steigvorgang für die Insassen des Rollstuhls schonender. Insbesondere bei bestimmten Krankheitsbildern, bei denen Patienten empfindlich auf äußere Einwirkungen wie Stöße und Schocks reagieren, beispielsweise bei Multiple Sklerose und anderen Entzündungskrankheiten, ist der Einsatz der erfindungsgemäßen Steigvorrichtung besonders empfehlenswert. Desweiteren ergibt sich aufgrund des im Mittel geringeren Energieverbrauchs für den Antriebsmotor eine insgesamt längere mögliche Fahrzeit.

In einer bevorzugten Ausführungsform der Erfindung weist die Treppensteigvorrichtung eine elektronische Steuereinrichtung zur Steuerung der Antriebsgeschwindigkeit der Steigeinheit auf. Hierbei kann mindestens ein Sensor vorgesehen werden, der einem Steigelement zugeordnet ist, wobei der Sensor dazu ausgelegt ist, eine bestimmte Lage des Steigelements zu erfassen und ein Signal an die Steuereinrichtung abzugeben, und die Steuereinrichtung dazu ausgelegt ist, die Antriebsgeschwindigkeit des Steigelements in Abhängigkeit von dem Signal des Sensors zu steuern.

In einer bevorzugten Ausführungsform ist ein erster HAL-Sensor vorgesehen, der zum Erfassen einer bestimmten Lage des Steigelements dient. Ein zweiter HAL-Sensor kann zum Zählen der Umdrehungen des Antreibsmotors vorgesehen sein. Die Steuereinrichtung kann aus den Signalen des ersten HAL-Sensors und des zweiten HAL-Sensors die momentane Lage des Steigelements ermitteln und in einer ersten vorbestimmten Lage des Steigelements die Antriebsgeschwindigkeit absenken und in einer zweiten vorbestimmten Lage des Steigelements die Antriebsgeschwindigkeit erhöhen. Die erste vorbestimmte Lage und die zweite vorbestimmte Lage basieren hierbei vorzugsweise auf einer typischen Stufenhöhe einer Treppe. Es kann sich um fest einprogrammierte Werte handeln, die beispielsweise in einem Speicher bzw. einem Programm der elektronischen Steuereinrichtung abgelegt sind. Zudem besteht die Möglichkeit, die erste vorbestimmte Lage und die zweite vorbestimmte Lage frei zu programmieren. Hierdurch kann ein Benutzer der Vorrichtung diese den speziellen örtlichen Gegebenheiten optimal anpassen.

Bei einer weiteren bevorzugten Ausführungsform kann ein Entfernungssensor vorgesehen sein, der dazu ausgelegt ist, den Abstand des Steigelements von einer Stufenoberfläche zu detektieren und in Abhängigkeit von diesem Abstand ein Signal an die Steuereinrichtung abzugeben, wobei die Steuereinrichtung die Antriebsgeschwindigkeit des Steigelements in Abhängigkeit von dem Signal des Entfernungssensors steuert. Bei dem Entfernungssensor kann es sich um einen Infrarotsensor, einen Ultraschallsensor oder einen mechanischen Sensor, bei dem beispielsweise ein federbelastetes Element über einen bestimmten Weg verschiebbar ist und dieser Weg erfaßt wird, handeln. Es sind zudem beliebige weitere Sensoreinrichtungen verwendbar, die dem Fachmann geeignet erscheinen.

Wenn der Entfernungssensor erkennt, daß ein vorbestimmter Abstand von einer Stufenoberfläche unterschritten wird, steuert die elektronische Steuereinheit den Antriebsmotor als Reaktion auf ein entsprechendes Signal des Entfernungssensors derart an, daß die Antriebsgeschwindigkeit abgesenkt wird. Ein anschließendes Erhöhen der Antriebsgeschwindigkeit kann beispielsweise in einem bestimmten zeitlichen Abstand nach der Absenkung der Antriebsgeschwindigkeit oder als Reaktion auf das Signal eines weiteren Entfernungssensors erfolgen.

Bei allen zuvor genannten Ausführungsformen kann die Absenkung der Antriebsgeschwindigkeit und das Anheben der Antriebsgeschwindigkeit jeweils nach einer Rampenfunktion bestimmter Länge und bestimmter Steilheit erfolgen. Die Absenkung kann hierbei kontinuierlich oder in bestimmten Stufen, linear, progressiv oder degressiv und über unterschiedliche Zeitspannen erfolgen. Für das Absenken und das Anheben der Antriebsgeschwindigkeit können unterschiedliche Rampen vorgesehen sein. Die einzelnen Parameter der Rampenfunktion können zudem für die Absenkung der Antriebsgeschwindigkeit und für das Anheben der Antriebsgeschwindigkeit unabhängig voneinander frei programmierbar sein. Hierdurch kann ein Benutzer der Vorrichtung diese den speziellen Einsatzzwecken und sonstigen Randbedingungen optimal anpassen.

In einer bevorzugten Ausführungsform der erfindungsgemäßen Treppensteigvorrichtung weist die Steigeinheit zwei Laufradpaare auf, wobei jedes Laufrad die Funktion eines Steigelements hat. Beide Laufräder eines Laufradpaars sind gegenüber der Trägereinheit um eine parallel zu ihrer Mittelachse verlaufende Welle verschwenkbar gelagert.

In einer anderen Ausführungsform kann die Steigeinheit einen oder mehrere Kettentriebe aufweisen, die mit Nocken versehen eine Auf- oder Abwärtsbewegung der Treppensteigvorrichtung an der Treppenkante bewirkt. Hierzu wird die Treppensteigvorrichtung an die Treppenkante herangeführt, bis eine Nocke des Kettentriebs die Stufenkante erfaßt, und die Treppensteigvorrichtung auf die nächsthöhere oder darunterliegende Stufe hebt oder senkt.

Bei einer weiteren Ausführungsform der erfindungsgemäßen Treppensteigvorrichtung kann die Steigeinheit eine oder mehrere Stelzen aufweisen, die eine Kurvenbahn beschreiben, wobei sie über einen Kurbeltrieb oder Exzenter angetrieben werden. Diese Kurvenbahn ist je nach Ausführungsform dazu geeignet, die vertikale und laterale Distanz einer Stufe zu überwinden. Dabei setzt die Stelze entsprechend der vorgegebenen Steigrichtung jeweils auf der nächsthöheren oder darunterliegenden Stufe auf und hebt die Treppensteigvorrichtung auf diese Stufe bzw. senkt sie auf sie ab.

Nachfolgend wird ein Ausführungsbeispiel einer erfindungsgemäß ausgebildeten und für einen Rollstuhl vorgesehenen Treppensteigvorrichtung anhand der Zeichnung näher erläutert.

Im einzelnen zeigt
Fig. 1 eine schematische Teilseitenansicht eines Rollstuhles mit einem Laufradpaar der Treppensteigvorrichtung;
Fig. 2 eine schematische Seitenansicht des Laufradpaares mit den Antriebsvorrichtungen;
Fig. 3 eine gegenüber Fig. 2 vergrößerte Schnittdarstellung entlang der Linie III-III in Fig. 2 durch das Laufradpaar;
Fig. 4 eine schematische Seitenansicht des Rollstuhles in seiner normalen Fahr- und Abstellposition;
Fig. 5 - 8 den Rollstuhl in vier verschiedenen Stellungen seiner Treppensteigvorrichtungen beim Treppensteigen;
Fig. 9 eine der Fig. 3 entsprechende Teilschnittdarstellung durch eines der Laufräder eines Laufradpaares.

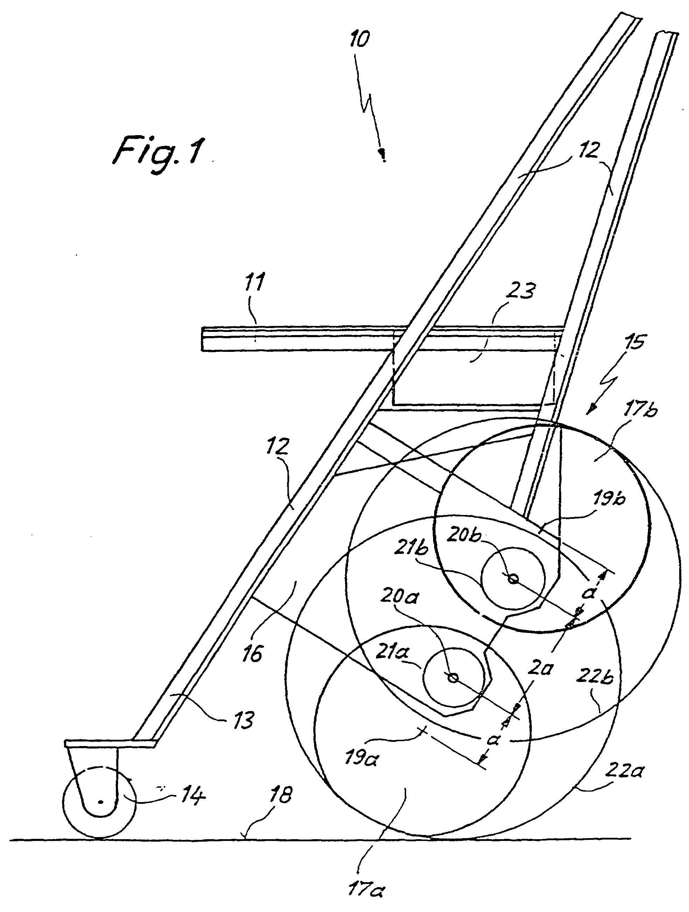

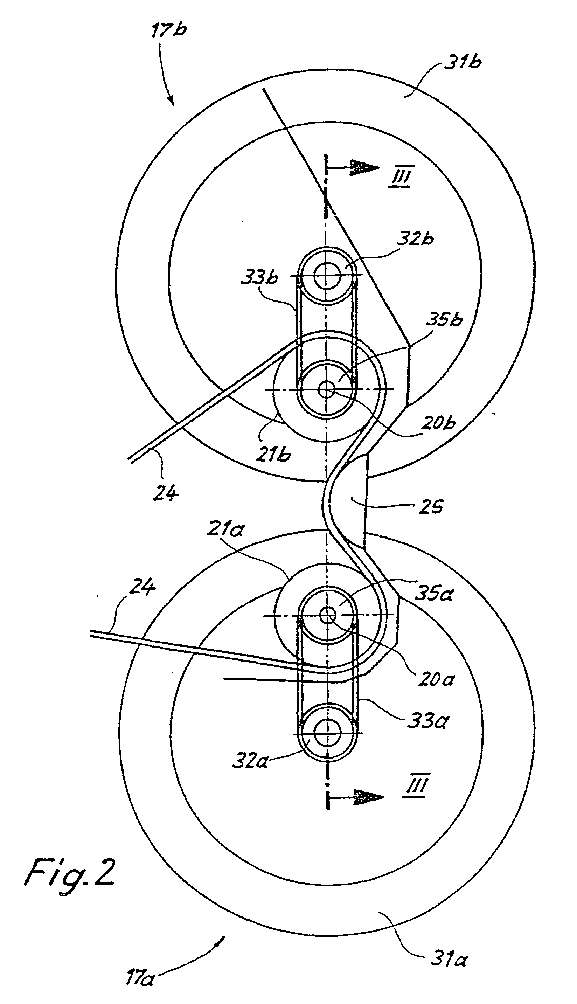

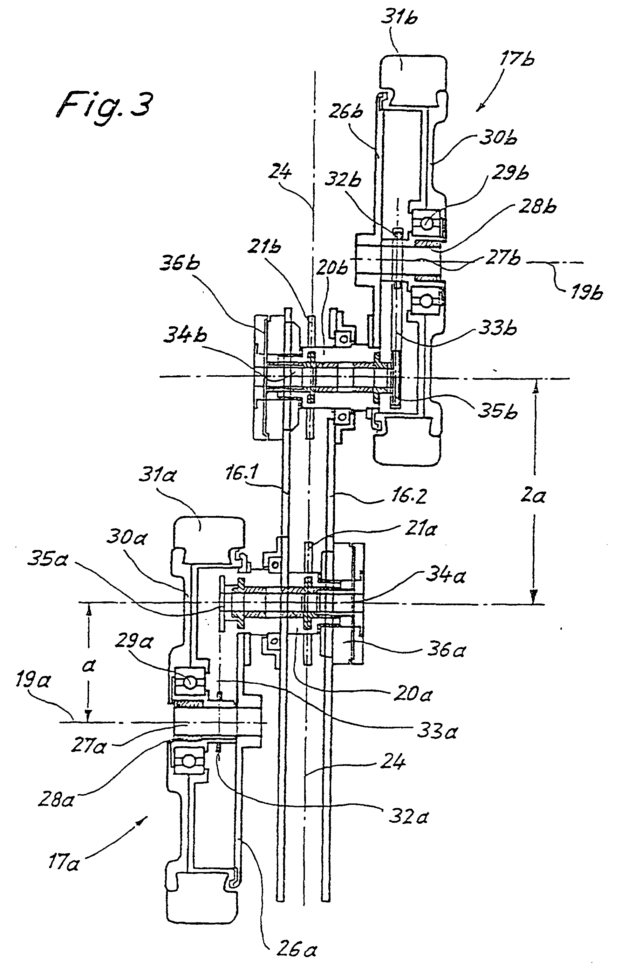

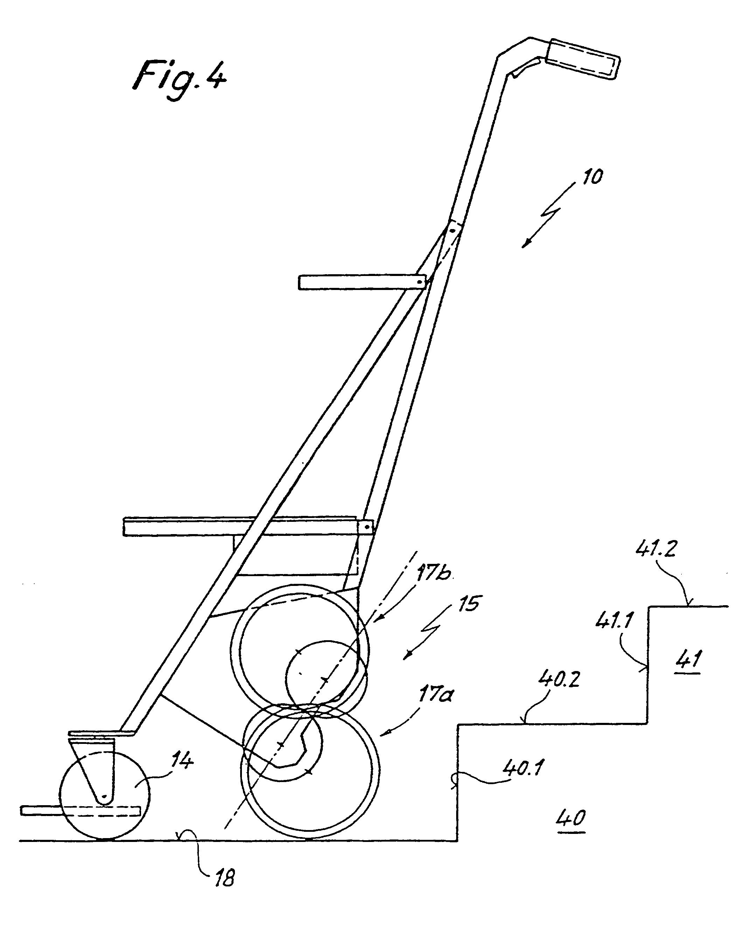

Fig. 1 zeigt in schematischer Seitenansicht einen Rollstuhl 10 für Gehunfähige, mit einem Sitzrahmen 11, der mit einem Stuhlrahmen 12 verbunden ist, der vorne in zwei Fußstegen 13 endet, an denen jeweils eine Lenkrolle 14 drehbar gelagert ist. In der Seitenansicht der Fig. 1 ist nur die linke Lenkrolle 14 ersichtlich. Am Stuhlgestell 12 ist ein Traggestell für eine Treppensteigvorrichtung 15 befestigt, das eine aus Fig. 1 ersichtliche linke Tragplatte 16 und auf der nicht sichtbaren rechten Seite des Rollstuhles 10 eine gleiche rechte Tragplatte 16 aufweist. An jeder Tragplatte 16 ist ein Paar von Laufrädern 17a und 17b angeordnet, von denen in der in Fig. 1 und Fig. 4 dargestellten Normalposition oder Ruhestellung der Treppensteigvorrichtung 15 eines auf der Fahrbahn 18 läuft. Der genaue Aufbau des Laufradpaares 17a/17b und die gegenseitige Anordnung der beiden Laufräder 17a und 17b sowie ihr Antrieb werden nachfolgend anhand der Fig. 2 und 3 näher erläutert. In Fig. 1 sind die Mittelpunkte 19a und 19b der beiden Laufräder 17a und 17b sowie exzentrisch dazu angeordnete und in der Tragplatte 16 gelagerte Antriebswellen 20a und 20b mit zugehörigen Antriebs-Kettenrädern 21a und 21b dargestellt. Außerdem sind die umhüllenden Kreise 22a und 22b eingetragen, welche der Umfang der Laufräder 17a und 17b bei ihrer Bewegung um die exzentrischen Antriebswellen 20a und 20b beschreibt. Der gegenseitige Abstand der beiden Antriebswellen 20a und 20b beträgt 2a, also den doppelten Wert des Abstands a des Mittelpunktes 19a oder 19b des Laufrades 17a oder 17b von der Achse seiner exzentrischen Antriebswelle 20a oder 20b.

Der elektrische Antriebsmotor, welcher die Treppensteigvorrichtung betätigt, ist in den Zeichnungen nicht dargestellt. Fig. 1 zeigt unter dem Sitzrahmen 11 einen Kasten 23 für die Unterbringung von Akkumulatoren, aus denen der gemeinsame, mit einer ebenfalls nicht dargestellten elektronischen Steuereinrichtung gekoppelte elektrische Antriebsmotor betrieben wird. Er bewegt eine aus Fig. 2 ersichtliche endlose Kette 24, die über die beiden Kettenräder 21a und 21b der beiden Antriebswellen 20a und 20b zur Erzielung einer jeweils gleichsinnigen und gleich schnellen Drehbewegung der beiden Antriebswellen 20a, 20b geführt ist. Zwischen den beiden Kettenrädern 21a und 21b wird die gemeinsame Antriebskette 24 über einen Gleitkörper 25 geführt, der auch durch ein Umlenkkettenrad ersetzt werden könnte. Es versteht sich, daß auf der rechten Seite des Rollstuhles 10 ein gleiches Laufradpaar in genau gleicher Art und Weise angeordnet und angetrieben ist.

Die Schnittdarstellung der Fig. 3 zeigt, daß die Tragplatte 16 aus zwei mit Abstand zueinander verlaufenden parallelen Plattenwänden 16.1 und 16.2 besteht, zwischen denen die gemeinsame Antriebskette 24, die nur durch eine strichpunktierte Linie angedeutet ist, geführt ist und die Kettenräder 21a und 21b angeordnet sind, die auf den als Hohlwellen ausgebildeten, in der Tragplatte 16.1/16.2 gelagerten Antriebswellen 20a und 20b befestigt sind.

Aus der Schnittdarstellung der Fig. 3 sind auch der Aufbau der Laufräder und eine auf die Laufräder wirkende Bremsvorrichtung ersichtlich. Jedes der beiden gleich ausgebildeten Laufräder 17a und 17b eines Laufradpaares weist eine Nabenscheibe 26a,26b auf, die mit der exzentrischen Antriebswelle 20a,20b fest verbunden ist und einen zentrischen Achsbolzen 27a,27b aufweist. Auf den Achsbolzen 27a,27b ist eine Lagerhülse 28a,28b aufgeschoben, auf welcher ein Wälzlager-Richtgesperre 29a,29b befestigt ist, auf welchem wiederum der in einem Gummireifen 31a,31b endende Laufkranz 30a,30b gelagert ist. Die Lagerhülse 28a,28b ist mit einem Kettenrad 32a,32b versehen, das über eine auch aus Fig. 2 ersichtliche endlose Kette 33a,33b mit einem koaxial zur zugeordneten hohlen Antriebswelle 20a,20b auf einem konzentrisch in der Antriebswelle gelagerten Wellenzapfen 34a,34b befestigten Kettenrad 35a,35b gekoppelt ist. Der Wellenzapfen 34a,34b ist in nicht näher dargestellter Weise mit der Bremsscheibe einer elektromagnetisch betätigbaren Bremsvorrichtung 36a,36b verbunden.

Die beiden Kettenräder 32a,32b und 35a,35b sind gleich groß, so daß sich ein Kettentrieb mit dem Übersetzungsverhältnis 1:1 ergibt. Wird die elektromagnetische Bremsvorrichtung 36a,36b über eine nicht dargestellte Steuereinrichtung aktiviert, ist der Wellenzapfen 34a,34b blockiert, was bedeutet, daß auch die Lagerhülse 28a,28b blockiert ist, so daß das Wälzlager-Richtgesperre 29a,29b eine Drehung des Laufkranzes 30a,30b des betreffenden Laufrades 17a,17b nur in einer Richtung gestattet. In der anderen Drehrichtung ist das betreffende Laufrad 17a,17b blockiert. Durch den Antrieb der Kette 24 und einer damit bewirkten Drehung der Antriebswellen 20a,20b wird aber die fest mit der Antriebswelle 20a,20b verbundene Nabenscheibe 26a,26b und damit auch der Laufkranz 30a,30b der Laufräder 17a und 17b verschwenkt, um die Treppensteigbewegung aufwärts oder abwärts - je nach eingestellter Drehrichtung des Antriebsmotors für die Kette 24 - auszuführen. Bei der Hubbewegung eines Laufrades bleibt sein Laufkranz auf Grund des gewählten Übersetzungsverhältnisses 1:1 des Kettentriebes gebremst stehen.

Aus den Fig. 2 und 3 ist ersichtlich, wie die Nabenscheibe 26b des einen Laufrades 17b des Laufradpaares 17a/17b gegenüber der Nabenscheibe 26a des anderen Laufrades 17a um einen Umfangswinkel von 180° versetzt mit der ihr zugeordneten Antriebswelle 20b verbunden ist.

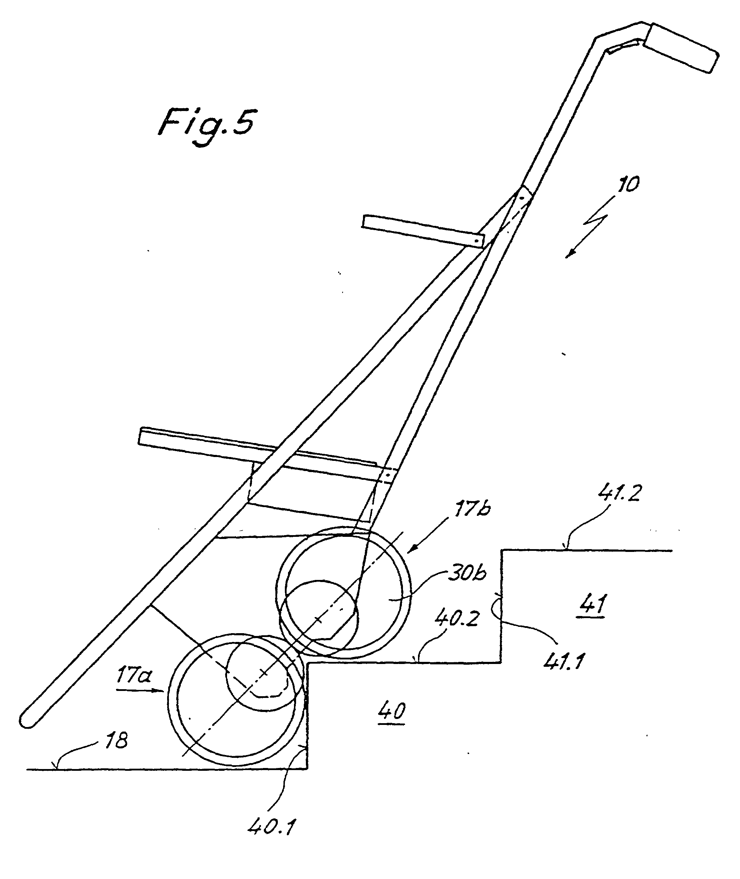

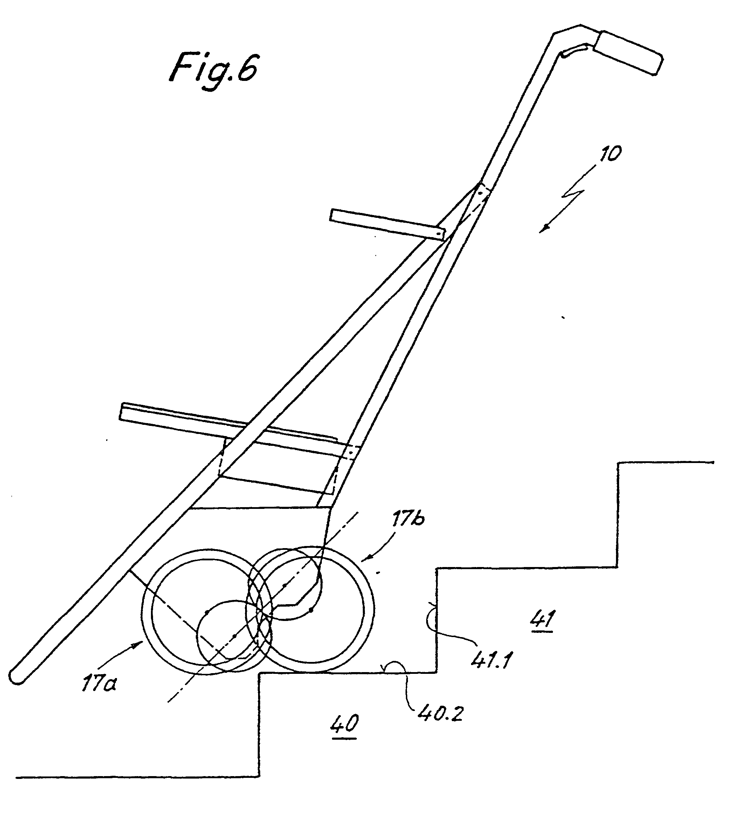

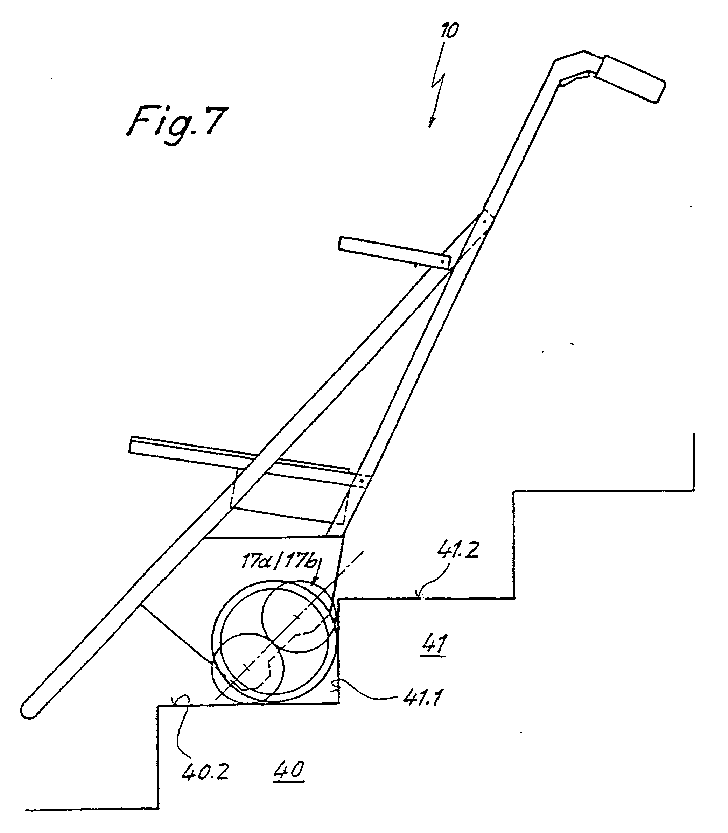

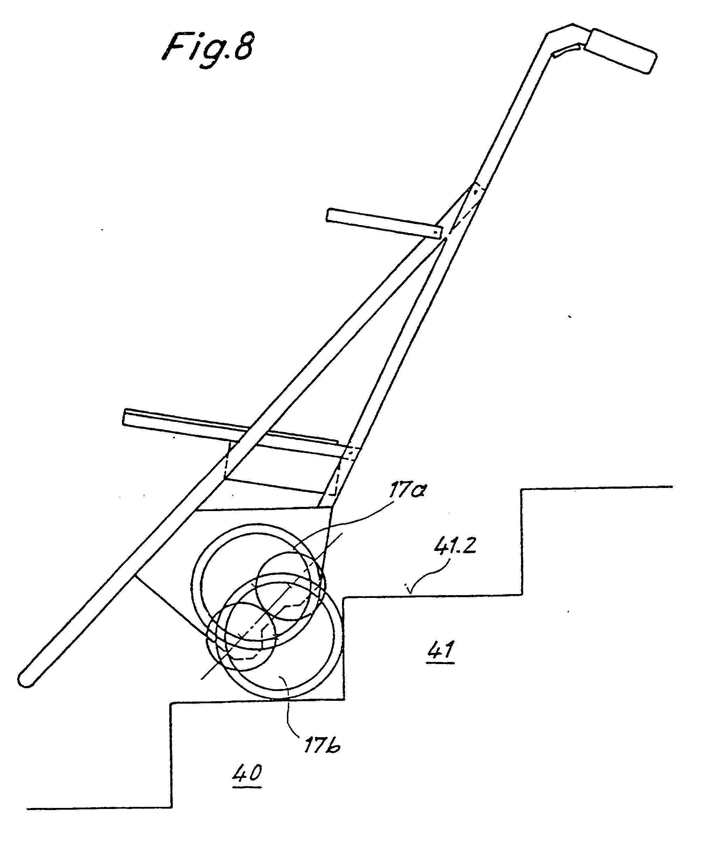

Die Fig. 4 bis 8 demonstrieren den Bewegungsablauf der Laufradpaare der Treppensteigvorrichtung beim Aufwärtssteigen. Die Figuren zeigen den Rollstuhl 10 jeweils in Seitenansicht und damit auch nur eines der beiden Laufradpaare der Treppensteigvorrichtung 15. Fig. 4 zeigt den Rollstuhl 10 in einer normalen Fahrstellung, in welcher die beiden Laufräder 17a und 17b beider Laufradpaare etwa übereinander angeordnet sind und das Laufrad 17a auf der Lauffläche 18 aufliegt. In dieser Stellung läßt sich der Rollstuhl 10 bei unbewegter Kette 24 und ohne eingelegte Bremsen frei verfahren. In dieser normalen Laufstellung wird der Rollstuhl 10 rückwärts gegen die Vorderkante 40.1 der ersten Treppenstufe 40 herangefahren, die Bremsen betätigt und dann der Antriebsmotor für die Kette 24 der Treppensteigvorrichtung 15 eingeschaltet. Dadurch wird das Laufrad 17b mit seinem in Vorwärtsrichtung blockierten Laufkranz 30b auf die Oberseite der ersten Stufe 40 bewegt, wie aus Fig. 5 ersichtlich ist. Der Rollstuhl 10 stützt sich jetzt auf das Laufrad 17b ab, während im weiteren Betrieb der Treppensteigvorrichtung das Laufrad 17a nach oben nachgeschwenkt wird, wie Fig. 6 zeigt. Der Rollstuhl läßt sich wegen des Wälzlager-Richtgesperres 29a auf den Laufrädern 17b bis zur Vorderkante 41.1 der nächsten Stufe 41 rollen. Im weiteren Verlauf der Bewegung der Treppensteigvorrichtung gelangen die beiden Laufräder 17a,17b der beiden Laufradpaare in eine aus Fig. 7 ersichtliche koaxiale Stellung, aus welcher heraus das Laufrad 17a gemäß Fig. 8 hochgeschwenkt wird, bis es analog der Stellung nach Fig. 5 auf die Trittfläche 41.2 der zweiten Treppenstufe 41 gelangt. Dieser Vorgang wiederholt sich, wobei abwechselnd das eine Laufrad 17a und das andere Laufrad 17b auf die jeweils nächste Treppenstufe hochgehoben werden.

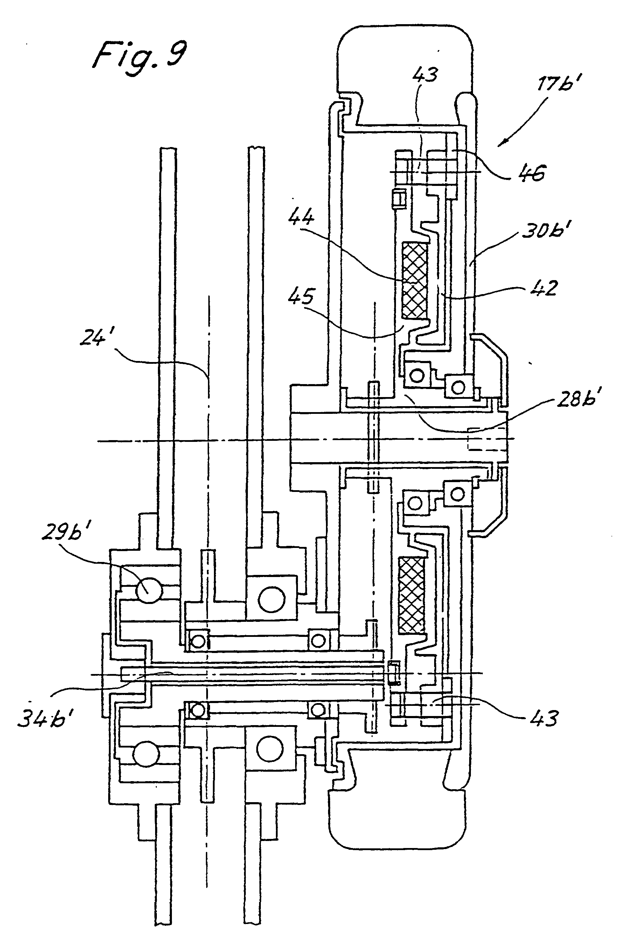

Fig. 9 zeigt einen einzelnen Längsschnitt durch ein Laufrad 17b' einer Treppensteigvorrichtung, bei welcher die elektromagnetische Bremsvorrichtung an der Nabenscheibe 30b' angeordnet ist. Dadurch ergibt sich eine größere Bremsfläche. Eine mit dem Laufkranz 30b' verbundene Ankerscheibe 42 ist durch Federn in die Bremsstellung vorgespannt, in welcher an ihr befestigte Sperrbolzen 43 in einen am Laufkranz 30b' befestigten Lochring 46 eingreifen, so daß bei Stromausfall die Bremsvorrichtung automatisch wirksam wird. Zum Lösen der Bremse wird die auf einer mit der Lagerhülse 28b' fest verbundenen Gegenscheibe 45 angeordnete Magnetwirkung 44 erregt und dadurch die Bremse gelöst. Ein Wälzlager-Richtgesperre 29b' ist hier auf dem Wellenzapfen 34b' angeordnet.

In einer nicht dargestellten Ausführungsform kann eine Kniehebelbremse vorgesehen sein, bei der ein unterhalb der Mittelachse des Laufrades schwenkbar gelagerter Hebel mittels eines Federelements gegen den Fahruntergrund gedrückt wird. An dem äußeren Ende des Hebels ist eine Tastrolle drehbar so angeordnet, daß sie beim Vorschieben der Treppensteigvorrichtung zum Zwecke des Absenkens auf den nächsten unteren Treppenabsatz in Bewegungsrichtung gesehen vor der Mittelachse des Laufrades angeordnet ist. Der Hebel verfügt über eine seitlich angebrachte Bremsbacke, die mit dem Laufrad in Eingriff gelangen kann, wobei sie vorzugsweise in einen radialen Hinterschnitt des Laufrades eingreift. Wenn die Treppensteigvorrichtung zum Absenken auf den nächsten unteren Treppenabsatz in Richtung der Treppenkannte bewegt, so senkt sich der Hebel ab, sobald die Tastrolle den Treppenabsatz überschritten hat, und infolge der khniehebelartigen Funktion wird das Rad gebremst bzw. blockiert. Die Anordnung ist hierbei so gewählt, daß die Bremskräfte umso größer werden, je größer die Kraft in der Vorwärtsbewegungsrichtung ist. Hierdurch wird ein Durchrutschen der Bremse zuverlässig verhindert.

Die speziellen Bauteile, die das erfindungsgemäße Absenken und Anheben der Antriebsgeschwindigkeit des elektrischen Antriebsmotors realisieren, sowie deren Funktion werden im folgenden anhand zweier Ausführungsbeispiele beschrieben.

Das erste Ausführungsbeispiel verwirklicht eine sogenannte programmmäßig gesteuerte Reduktion der Antriebsgeschwindigkeit des elektrischen Antriebsmotors. Hierbei erkennt die elektronische Steuereinrichtung die Lage des Steigelements, bei der vorstehend beschriebenen Ausführungsform somit die Lage des Laufrads 17a bzw. 17b. Hierzu wird ein an einer geeigneten Stelle angebrachter HAL-Sensor verwendet. Ein zweiter, ebenfalls an einer geeigneten Stelle angebrachter HAL-Sensor zählt die Umdrehungen des elektrischen Antriebsmotors. Aus den Signalen dieser beiden HAL-Sensoren erkennt die elektronische Steuereinrichtung über ein zuschaltbares elektronisches Steuerprogramm, wann das Laufrad zu verlangsamen ist. Dieser Zeitpunkt ist auf eine typische Stufenhöhe abgestimmt. Das anschließende Erhöhen der Antriebsgeschwindigkeit erfolgt ebenfalls aufgrund der Steuerprogrammfunktion, beispielsweise nach einer bestimmten Anzahl von Umdrehungen des elektrischen Antriebsmotors.

Bei einer zweiten Ausführungsform, einer sogenannten sensorgesteuerten Reduktion der Antriebsgeschwindigkeit des elektrischen Antriebsmotors, sind an der Treppensteigvorrichtung ein oder mehrere Entfernungssensoren angebracht. Hierbei kann es sich um Infrarotsensoren, Ultraschallsensoren oder auch mechanische Sensoren handeln, die federbelastet über eine bestimmte Wegstrecke verschiebbar sind, wobei diese Wegstrecke erfaßt wird, oder ein elastisch verformbares Element, dessen Verformung, beispielsweise über Dehnmeßstreifen, erfaßt wird. Der Entfernungssensor detektiert den Abstand des sich in Bewegung befindlichen Steigelements, bei der vorstehend beschriebenen Ausführungsform somit die Lage des Laufrads 17a bzw. 17b, zur nächsten Stufenoberfläche. Bei einem vorbestimmten Schwellenwert initiiert die elektronische Steuereinrichtung als Reaktion auf ein entsprechendes Signal des Entfernungssensors die Geschwindigkeitsreduktion.

Entfernungssensoren können sowohl an den Steigelementen, beispielsweise an den Laufrädern, als auch an einem stationären Teil der Treppensteigvorrichtung angeordnet sein.

Bei den vorstehend beschriebenen und in den Figuren dargestellten Ausführungsbeispielen ist die Trägereinheit durch den Sitzrahmen 11 und den Stuhlrahmen 12 verwirklicht. Es versteht sich, daß das erfindungsgemäße Prinzip auf beliebige andere Treppensteigvorrichtungen anwendbar ist. Beispielsweise können Treppensteigvorrichtungen vorgesehen sein, die mit einem bestehenden handelsüblichen Rollstuhl verbunden werden können.

Das erfindungsgemäße Prinzip ist zudem auf beliebige andere Treppensteigvorrichtungen anwendbar, die mit oder ohne externe Bedienpersonen zum Transportieren von Lasten oder Personen auf Treppen geeignet sind.

## Patentansprüche

1. Treppensteigvorrichtung, beispielsweise für Rollstühle für Gehunfähige, mit einer Trägereinheit (11, 12) und einer mit der Trägereinheit (11, 12) verbundenen Steigeinheit, wobei die Steigeinheit mindestens ein Steigelement (17a, 17b) aufweist, das durch einen Antriebsmotor antreibbar und so ausgebildet ist, daß es mit dem jeweils nächstgelegenen Treppenabsatz einer Treppe in Berührung gelangen und die Treppensteigvorrichtung auf den nächstgelegenen Treppenabsatz heraufheben oder absenken kann,
**dadurch gekennzeichnet,**
**daß** die Steigeinheit mit unterschiedlichen Antriebsgeschwindigkeiten betreibbar ist, wobei die Antriebsgeschwindigkeit kurz vor dem Aufsetzen eines Steigelements (17a, 17b) auf den nächstgelegenen Treppenabsatz gegenüber einer ersten vorbestimmten Antriebsgeschwindigkeit reduzierbar ist, so daß ein weiches Aufsetzen erreicht wird, und nach dem Aufsetzen auf den nächstgelegenen Treppenabsatz wieder auf die erste vorbestimmte Antriebsgeschwindigkeit erhöht wird.

2. Vorrichtung nach Anspruch 1, **gekennzeichnet durch** eine elektronische Steuereinrichtung zur Steuerung der Antriebsgeschwindigkeit der Steigeinheit.

3. Vorrichtung nach Anspruch 2, **gekennzeichnet durch** mindestens einen Sensor, der einem Steigelement (17a, 17b) zugeordnet ist, wobei der Sensor dazu ausgelegt ist, eine bestimmte Lage des Steigelements (17a, 17b) zu erfassen und ein Signal an die Steuereinrichtung abzugeben, und die Steuereinrichtung dazu ausgelegt ist, die Antriebsgeschwindigkeit des Steigelements (17a, 17b) in Abhängigkeit von dem Signal des Sensors zu steuern.

4. Vorrichtung nach Anspruch 3, **gekennzeichnet durch** einen ersten HAL-Sensor zum Erfassen einer bestimmten Lage des Steigelements (17a, 17b).

5. Vorrichtung nach Anspruch 4, **gekennzeichnet durch** einen zweiten HAL-Sensor zum Zählen der Umdrehungen des Antriebsmotors.

6. Vorrichtung nach Anspruch 5, **dadurch gekennzeichnet, daß** die Steuereinrichtung dazu ausgelegt ist, aus den Signalen des ersten HAL-Sensors und des zweiten HAL-Sensors die momentane Lage des Steigelements (17a, 17b) zu ermitteln, in einer ersten vorbestimmten Lage des Steigelements (17a, 17b) die Antriebsgeschwindigkeit abzusenken und in einer zweiten vorbestimmten Lage des Steigelements (17a, 17b) die Antriebsgeschwindigkeit zu erhöhen.

7. Vorrichtung nach Anspruch 6, **dadurch gekennzeichnet, daß** die erste vorbestimmte Lage und die zweite vorbestimmte Lage basierend auf einer typischen Stufenhöhe einer Treppe festgelegt sind.

8. Vorrichtung nach Anspruch 6, **dadurch gekennzeichnet, daß** die erste vorbestimmte Lage und die zweite vorbestimmte Lage frei programmierbar sind.

9. Vorrichtung nach Anspruch 3, **gekennzeichnet durch** einen Entfernungssensor, der dazu ausgelegt ist, den Abstand des Steigelements (17a, 17b) von einer Stufenoberfläche zu detektieren und in Abhängigkeit von diesem Abstand ein Signal an die Steuereinrichtung abzugeben, wobei die Steuereinrichtung die Antriebsgeschwindigkeit des Steigelements (17a, 17b) in Abhängigkeit von dem Signal des Entfernungssensors steuert.

10. Vorrichtung nach Anspruch 9, **dadurch gekennzeichnet, daß** der Entfernungssensor ein Infrarotsensor, ein Ultraschallsensor, oder eine mechanische Sensoreinrichtung ist.

11. Vorrichtung nach Anspruch 9 oder 10, **dadurch gekennzeichnet, daß** die Antriebsgeschwindigkeit abgesenkt wird, wenn ein vorbestimmter Abstand unterschritten wird.

12. Vorrichtung nach Anspruch 11, **dadurch gekennzeichnet, daß** die Antriebsgeschwindigkeit erhöht wird, wenn die Steigeinheit über eine vorbestimmte Zeitspanne mit abgesenkter Antriebsgeschwindigkeit betrieben wurde.

13. Vorrichtung nach einem der Ansprüche 2 bis 12, **dadurch gekennzeichnet, daß** die elektronische Steuereinrichtung abschaltbar ist.

14. Vorrichtung nach einem der Ansprüche 2 bis 13, **dadurch gekennzeichnet, daß** die Absenkung der Antriebsgeschwindigkeit und das Anheben der Antriebsgeschwindigkeit jeweils nach einer Rampenfunktion bestimmter Länge und bestimmter Steilheit erfolgen.

15. Vorrichtung nach Anspruch 14, **dadurch gekennzeichnet, daß** die einzelnen Parameter der Rampenfunktionen für die Absenkung der Antriebsgeschwindigkeit und das Anheben der Antriebsgeschwindigkeit unabhängig voneinander frei programmierbar sind.

16. Vorrichtung nach einem der vorstehenden Ansprüche, **dadurch gekennzeichnet, daß** die Steigeinheit zwei als Steigelemente (17a, 17b) fungierende Laufradpaare, deren beide Laufräder gegenüber der Trägereinheit (11, 12) um eine parallel zu ihrer Mittelachse verlaufende Welle verschwenkbar gelagert sind, aufweist.

## Claims

1. Stair climbing device, such as for wheel chairs intended for handicapped, having a support unit (11, 12) and a climbing unit coupled to said support unit (11, 12), wherein said climbing unit comprises at least one climbing element (17a, 17b) drivable by a drive motor and being designed such that it can get in contact with the respective next step of a stair and that it can lift or lower the stair climbing device to the next step,
**characterized in that**
said climbing unit is adapted to be operated with different driving speeds, wherein the driving speed shortly before the setting down of a climbing element (17a, 17b) on the next step is reducible with respect to a first predetermined driving speed so that a soft setting down is achieved, and that after the setting down on the next step the driving speed is increased again to the first predetermined driving speed.

2. The device according to claim 1, **characterized by** an electronic control unit for controlling the driving speed of said climbing unit.

3. The device according to claim 2, **characterized by** at least one sensor being allocated to a climbing element (17a, 17b), wherein said sensor is adapted to detect a specific position of said climbing element (17a, 17b) and to provide a signal to said control unit and said control unit is adapted to control the driving speed of said climbing element (17a, 17b) in dependence on the signal of said sensor.

4. The device according to claim 3, **characterized by** a first HAL-sensor for detecting a specific position of said climbing element (17a, 17b).

5. The device according to claim 4, **characterized by** a second HAL-sensor for counting the revolutions of said drive motor.

6. The device according to claim 5, **characterized in that** said control unit is adapted to determine the current position of said climbing element (17a, 17b) from the signals of said first HAL-sensor and said second HAL-sensor, to decrease the driving speed at a first predetermined position of said climbing element (17a, 17b) and to increase the driving speed at a second predetermined position of said climbing element (17a, 17b).

7. The device according to claim 6, **characterized in that** said first predetermined position and said second predetermined position are set based on a typical height of a step of a stair.

8. The device according to claim 6, **characterized in that** said first predetermined position and said second predetermined position are freely programmable.

9. The device according to claim 3, **characterized by** a distance sensor adapted to detect the distance of said climbing element (17a, 17b) to an upper surface of a step and to emit a signal to said control unit in dependence on this distance, wherein said control unit controls the driving speed of said climbing element (17a, 17b) in dependence on the signal of said distance sensor.

10. The device according to claim 9, **characterized in that** said distance sensor is an infrared sensor, an ultrasonic sensor or a mechanical sensor device.

11. The device according to claim 9 or 10, **characterized in that** the driving speed is decreased if said distance falls below a predetermined distance.

12. The device according to claim 11, **characterized in that** the driving speed is increased if said climbing element has been operated with decreased driving speed for a predetermined period of time.

13. The device according to any of claims 2 to 12, **characterized in that** said electronic control unit can be switched off.

14. The device according to any of claims 2 to 13, **characterized in that** the decrease of the driving speed and the increase of the driving speed are both effected according to a ramp function of specific length and specific steepness.

15. The device according to claim 14, **characterized in that** the individual parameters of said ramp functions for the decrease of the driving speed and the increase of the driving speed are freely programmable indeperidently of each other.

16. The device according to any of the preceding claims, **characterized in that** said climbing unit comprises two pairs of running wheels functioning as climbing elements (17a, 17b), said both running wheels thereof being mounted pivotably relative to said support unit (11, 12) around a shaft extending parallel to their center axis.

## Revendications

1. Dispositif pour monter les escaliers, par exemple pour des fauteuils roulants pour handicapés, avec une unité de support (11, 12) et une unité de montée reliée à l'unité de support (11, 12), l'unité de montée comportant au moins un élément de montée (17a, 17b) qui peut être entraîné par un moteur d'entraînement et qui est configuré de telle manière qu'il peut entrer en contact avec la marche d'un escalier située immédiatement après et soulever ou abaisser le dispositif pour monter les escaliers sur la marche d'escalier située immédiatement après, **caractérisé en ce que** :
- l'unité de montée peut être entraînée à des vitesses d'entraînement différentes, la vitesse d'entraînement juste avant la pose d'un élément de montée (17a, 17b) sur la marche d'escalier située immédiatement après pouvant être réduite par rapport à une première vitesse d'entraînement prédéterminée, de sorte que l'on obtient une pose en douceur, et de nouveau augmentée jusqu'à la première vitesse d'entraînement prédéterminée après la pose sur la marche d'escalier située immédiatement après.

2. Dispositif selon la revendication 1, **caractérisé par** une unité de commande électronique pour commander la vitesse d'entraînement de l'unité de montée.

3. Dispositif selon la revendication 2, **caractérisé par** au moins un détecteur qui est associé à un élément de montée (17a, 17b), le détecteur étant conçu pour détecter une position déterminée de l'élément de montée (17a, 17b) et pour envoyer un signal à l'unité de commande électronique et l'unité de commande est conçue pour commander la vitesse d'entraînement de l'élément de montée (17a, 17b) en fonction du signal du détecteur.

4. Dispositif selon la revendication 3, **caractérisé par** un premier détecteur HAL pour détecter une position déterminée de l'élément de montée (17a, 17b).

5. Dispositif selon la revendication 4, **caractérisé par** un deuxième détecteur HAL pour compter les rotations du moteur d'entraînement.

6. Dispositif selon la revendication 5, **caractérisé en ce que** l'unité de commande est conçue pour déterminer la position instantanée de l'élément de montée (17a, 17b) à partir des signaux du premier détecteur HAL et du deuxième détecteur HAL, pour réduire la vitesse d'entraînement dans une première position prédéterminée de l'élément de montée (17a, 17b) et pour augmenter la vitesse d'entraînement dans une deuxième position prédéterminée de l'élément de montée (17a, 17b).

7. Dispositif selon la revendication 6, **caractérisé en ce que** la première position prédéterminée et la deuxième position prédéterminée sont fixées sur la base d'une hauteur de marche typique d'un escalier.

8. Dispositif selon la revendication 6, **caractérisé en ce que** la première position prédéterminée et la deuxième position prédéterminée sont librement programmables.

9. Dispositif selon la revendication 3, **caractérisé par** un détecteur de proximité qui est conçu pour détecter la distance entre l'élément de montée (17a, 17b) et une surface de marche et pour envoyer un signal à l'unité de commande en fonction de cette distance, l'unité de commande commandant la vitesse d'entraînement de l'élément de montée (17a, 17b) en fonction du signal du détecteur de proximité.

10. Dispositif selon la revendication 9, **caractérisé en ce que** le détecteur de proximité est un détecteur infrarouge, un détecteur à ultrasons ou un dispositif de détection mécanique.

11. Dispositif selon la revendication 9 ou 10, **caractérisé en ce que** la vitesse d'entraînement est réduite lorsqu'une distance prédéterminée n'est pas atteinte.

12. Dispositif selon la revendication 11, **caractérisé en ce que** la vitesse d'entraînement est augmentée lorsque l'unité de montée a fonctionné à une vitesse d'entraînement réduite pendant une durée prédéterminée.

13. Dispositif selon l'une quelconque des revendications 2 à 12, **caractérisé en ce que** l'unité de commande électronique peut être déconnectée.

14. Dispositif selon l'une quelconque des revendications 2 à 13, **caractérisé en ce que** la réduction de la vitesse d'entraînement et l'augmentation de la vitesse d'entraînement se font chacune suivant une fonction de rampe ayant une longueur déterminée et une pente déterminée.

15. Dispositif selon la revendication 14, **caractérisé en ce que** les différents paramètres de la fonction de rampe pour la réduction de la vitesse d'entraînement et l'augmentation de la vitesse d'entraînement sont librement programmables indépendamment les uns des autres.

16. Dispositif selon l'une quelconque des revendications précédentes, **caractérisé en ce que** l'unité de montée comporte deux paires de roues mobiles fonctionnant comme des éléments de montée (17a, 17b) dont les deux roues mobiles sont logées pour pouvoir pivoter par rapport à l'unité de support (11, 12) autour d'un arbre s'étendant parallèlement à leur axe médian.
